(19) Europäisches Patentamt
European Patent Office
Office européen des brevets

(11) EP 1 417 255 B1

(12) EUROPEAN PATENT SPECIFICATION

(45) Date of publication and mention of the grant of the patent:
**16.08.2006 Bulletin 2006/33**

(21) Application number: **02747955.9**

(22) Date of filing: **24.06.2002**

(51) Int Cl.:
***C08J 9/32*** *(2006.01)* ***C09J 7/02*** *(2006.01)*
***C09J 153/02*** *(2006.01)* ***C09J 171/12*** *(2006.01)*

(86) International application number:
**PCT/US2002/019959**

(87) International publication number:
**WO 2003/011954 (13.02.2003 Gazette 2003/07)**

# (54) HIGH COHESIVE STRENGTH PRESSURE SENSITIVE ADHESIVE FOAM

DRUCKEMPFINDLICHER SCHAUMKLEBSTOFF MIT HOHER KOHÄSION

MOUSSE AUTO-ADHESIVE FORCE DE COHESION ELEVEE

(84) Designated Contracting States:
**AT BE CH CY DE DK ES FI FR GB GR IE IT LI LU MC NL PT SE TR**

(30) Priority: **31.07.2001 US 919595**

(43) Date of publication of application:
**12.05.2004 Bulletin 2004/20**

(73) Proprietor: **3M Innovative Properties Company**
**St. Paul, MN 55133-3427 (US)**

(72) Inventors:
- **KHANDPUR, Ashish K., Saint Paul, MN 55133-3427 (US)**
- **GEHLSEN, Mark D., Saint Paul, MN 55133-3427 (US)**
- **HANLEY, Kenneth J., Saint Paul, MN 55133-3427 (US)**
- **STRADINGER, John J., Saint Paul, MN 55133-3427 (US)**
- **FISCHER, Patrick J., Saint Paul, MN 55133-3427 (US)**
- **OSTERTAG, Eugene C., Saint Paul, MN 55133-3427 (US)**

(74) Representative: **Meyers, Hans-Wilhelm**
**Patentanwälte**
**von Kreisler-Selting-Werner**
**Postfach 10 22 41**
**50462 Köln (DE)**

(56) References cited:
**WO-A-00/24840** **WO-A-00/64973**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 417 255 B1

## Description

### Field of the Invention

The present invention relates to adhesive foam, more particularly, to pressure sensitive adhesive foam for forming high-strength bonds to low and high surface energy surfaces and to articles made with such foams.

### Background

Pressure sensitive adhesive (PSA) foams are used as attachment devices for a wide variety of assembly and manufacturing applications, such as exterior automotive mounting of moldings and nameplates. In a variety of such applications adhesion to rough or irregular surfaces is desired or necessitated. Under these circumstances thicker conformable pressure sensitive adhesive foams generally outperform thin pressure sensitive adhesives (such as those less than 125 microns thick). Many applications require PSA foams to support a load at elevated temperatures, typically in the range of 70°C, for which high cohesive strength foams are required. A standard method of increasing cohesive strength is to chemically crosslink the foam using irradiation processes, such as thermal radiation, ultraviolet (UV) radiation, gamma radiation, and electron beam (EB) radiation, etc.

### Summary of the Invention

The present invention is directed to a foamed pressure sensitive adhesive article having substantial cohesive strength, especially at elevated temperatures, that is higher than that which can be obtained without any chemical crosslinking. Typically cohesive strength of a pressure sensitive adhesive is directly associated with its shear holding power. Shear performance of the PSA foams of this invention is less dependent on total adhesive foamed article thickness and often shows better flexibility regarding material selection compared to foams covalently crosslinked through use of chemical crosslinking agents and/or irradiation treatment. The foam may be provided in a variety of shapes, including a rod, cylinder, sheet, etc

The adhesive article includes a styrenic block copolymer elastomer that is blended with a polyarylene oxide. The polyarylene oxide generally has high thermodynamic selectivity for styrenic blocks of the block copolymer, resulting in an adhesive that demonstrates many of the desirable properties of a chemically crosslinked adhesive but with more versatility. In this manner, the adhesives are essentially "physically" or "structurally" crosslinked by the aggregation of the hard (e.g., glassy) styrenic blocks without being covalently crosslinked, preferably by the formation of a network of microphase separated domains formed by the hard styrenic blocks being swollen by the polyarylene oxide. The microphase-separated domains may have lamellar spherical, cylindrical, micellar, or co-continuous morphologies, or other morphologies reported in the block copolymer literature.

PSA foams of the invention include a polymer matrix and are characterized by a density that is lower than the density of the bulk polymer matrix material itself. Density reduction is achieved in a number of ways, including, for example, through creation of gas-filled voids in the matrix (e.g., by means of a blowing agent) or inclusion of polymeric microspheres (e.g., expandable microspheres) or non-polymeric microspheres (e.g., glass microspheres).

The pressure sensitive article includes a polymeric mixture containing one or more styrenic block copolymers and one or more polyarylene oxide polymers. In one embodiment, the foam is a polymeric mixture that contains one or more expandable polymeric microspheres. The expandable polymeric microspheres create a foam article with numerous voids, the interiors of the voids being substantially non-adhesive, and are therefore compressible without collapsing. In this manner the foamed pressure sensitive adhesive articles can be subjected to routine pressure without excessive degradation of their foamed properties.

The styrenic block copolymer used in the pressure sensitive adhesive can be a diene-based copolymer, such as an isoprene-based copolymer or a butadiene-based copolymer. Specific suitable styrenic block copolymers include, for example, polymodal asymmetric block copolymers and linear styrenic block copolymers. The polyarylene oxide polymers include, for example, poly(2,6-dimethyl-1,4-phenylene ether). The polyarylene oxide polymer used in the pressure sensitive adhesive typically has a glass transition temperature ($T_g$), as determined from differential scanning calorimetry according to ASTM D3418, higher than that of the styrenic block, usually at least about 20°C higher than the $T_g$ of the styrenic block.

In another embodiment, the polymeric mixture forms a foamed pressure sensitive adhesive article having a shear holding power of at least 3000 minutes on anodized aluminum at a temperature of 70°C, as determined by ASTM 3654 utilizing a sample with dimensions of 25.4 mm by 12.7 mm supporting a 500 g mass.

In another embodiment, the foamed PSA has a shear holding power of at least 100 percent more than a chemically uncrosslinked foam of a similar composition that does not contain polyarylene oxide (when tested on anodized aluminum at a temperature of 70°C as determined by ASTM 3654 utilizing a sample with dimensions of 25.4 mm by

12.7 mm supporting a 500 g mass).

Another embodiment comprises a multilayer article having at least one pressure sensitive foam layer. The foam layer may comprise a polymer mixture that includes a styrenic block copolymer and a polyarylene oxide, and has at least one expandable microsphere. Alternatively, the foam layer may be a polymer mixture that includes a styrenic block copolymer and a polyarylene oxide, and has a shear holding power of at least 3000 minutes on anodized aluminum at a temperature of 70°C as determined by ASTM 3654 utilizing a sample with dimensions of 25.4 mm by 12.7 mm supporting a 500 g mass, or of at least 100 percent more than a chemically uncrosslinked foam of a similar composition but without polyarylene oxide when tested on anodized aluminum at a temperature of 70°C as determined by ASTM 3654 utilizing a sample with dimensions of 25.4 mm by 12.7 mm supporting a 500 g mass. Optionally, the multilayer article has at least one surface layer that is not foamed.

The polymeric mixture is generally suitable for use as an adhesive composition at elevated temperatures without being additionally crosslinked after formation of the foam. Thus, in most implementations, the polymeric mixture does not contain a chemical crosslinker and/or is not subjected to processes causing chemical crosslinking of the adhesive. If chemical crosslinking is present, it is typically present to an extent that does not significantly increase the shear holding power at elevated temperatures. This absence of substantial chemical crosslinking can be demonstrated, for example, by the gel content of the adhesive composition as determined by the Gel Content test method. In most implementations the polymeric mixture has a gel content of about zero. For the foams of the present invention, the gel content is preferably less than 25 percent of the crosslinkable material, more preferably less than 10 percent, and most preferably less than 2 percent. The foamed pressure sensitive adhesive article of the invention is manufactured such that it is not chemically crosslinked, but limited chemical crosslinking is acceptable in certain embodiments. However, in some implementations, the shear performance of the foams of the present invention can be augmented by subjecting the foams to irradiation (e.g., UV, EB, thermal) or adding a chemical crosslinker.

The invention is also directed to a method of forming a foamed pressure sensitive adhesive article. The method includes providing a polymeric composition containing a styrenic block copolymer and a polyarylene oxide having a softening temperature that is equal to or greater than 110 °C; heating the polymeric composition to above a softening temperature without substantially degrading the polymeric components; mixing the polymeric composition; cooling the polymeric composition to a temperature below the activation temperature of polymeric microspheres, and adding expandable polymeric microspheres to the cooled polymeric composition. The method generally further comprises heating the polymeric composition above the activation temperature of the polymeric microspheres.

By "softening temperature" it is meant the higher of a glass transition temperature ($T_g$) or a melting temperature ($T_m$). The softening temperature of a composition is the higher of a $T_g$ or a $T_m$ of all components of the composition. The softening temperature of a block copolymer is the higher of a $T_g$ or a $T_m$ of homopolymers of monomers constituting the different blocks such that the homopolymer has a degree of polymerization equal to that present in the block copolymer for that monomer.

Other features and advantages of the invention will be apparent from the following detailed description of the invention and the claims. The above summary of principles of the disclosure is not intended to describe each illustrated embodiment or every implementation of the present disclosure. The drawing and the detailed description that follow more particularly exemplify certain embodiments utilizing the principles disclosed herein.

## Brief Description of the Drawing

The invention will be more fully explained with reference to the following drawing:

Fig. 1 is a schematic drawing of an extrusion process for preparing articles according to an implementation of the invention.

While principles of the invention are amenable to various modifications and alternative forms, specifics thereof have been shown by way of example in the drawing and will be described in detail. It should be understood, however, that the intention is not to limit the invention to the particular embodiments described. On the contrary, the intention is to cover all modifications, equivalents, and alternatives falling within the spirit and scope of the disclosure.

## Detailed Description

The present invention is directed to a foamed pressure sensitive adhesive article. The pressure sensitive adhesive article includes a polymeric mixture containing one or more styrenic block copolymers and one or more polyarylene oxide polymers. The polymeric mixture is formed into a foam by either (1) use of expandable polymeric microspheres within the mixture or (2) use of a blowing agent.

As used herein, a "foamed pressure sensitive adhesive article" refers to an article containing a polymer matrix

having a surface available for bonding with slight finger pressure, that is tacky at room temperature, and in which the density of the article is less than the density of the neat polymer matrix.

An "expandable polymeric microsphere" is a microsphere that includes a polymer shell and a core material in the form of a gas, liquid, or combination thereof, that expands upon heating to a temperature at or above an activation temperature. Expansion of the core material, in turn, causes the shell to expand, at least at the activation temperature. An expandable microsphere is one where the shell can be initially expanded or further expanded without breaking. Some microspheres may have polymer shells that only allow the core material to expand at or near the activation temperature.

The pressure sensitive adhesive article of the invention typically has strong static shear holding power, as described in the test methods, especially at elevated temperatures and has good adhesion to both low and high surface energy substrates. Some embodiments of the adhesive foams of the present invention are particularly useful for forming strong bonds to low surface energy substrates. As used herein, low surface energy substrates are those having a surface energy of less than about 45 dynes per centimeter, more typically less than about 40 dynes per centimeter, and most typically less than about 35 dynes per centimeter.

## Styrenic Block Copolymer

The term "block copolymer" includes a variety of structures and architectures, including linear, branched, multi-arm, star (radial), comb, and tapered triblocks and multiblocks, as well as combinations. The preferred architecture is either a linear triblock or a star block copolymer. A preferred star block architecture is a polymodal asymmetric block copolymer disclosed in U.S. Patent No. 5,393,787. Additionally the block copolymer may include a substantial amount of diblock or homopolymer components. The block copolymers of this invention include a styrenic "A block" and elastomeric "B block" of the configuration A-B-(B-A)$_n$, where n ranges from 1 to 20. The styrenic A block consists of polymers having a poly(alkenylaromatic) block with a weight average molecular weight between 1,000 and approximately 50,000 gram/mole (g/mol). Examples of styrenic blocks include polymers made from monomers such as styrene, its homologs and analogs, such as alpha-methyl styrene, 3-methylstyrene, vinyltoluene, ethylstyrene, t-butylstyrene, isopropylstyrene, dimethylstyrene, and vinylnapthalenes, and mixtures thereof. The elastomeric B block is typically an elastomeric polymer of a conjugated diene monomer having a weight average molecular weight between 1,000 and 500,000 (g/mol). Exemplary elastomeric blocks include polybutadiene and polyisoprene, and copolymers thereof. Partially or fully hydrogenated versions of these materials are also included, such as poly(ethylene-co-butylene) and poly(ethylene-co-propylene). More than one styrenic block copolymer may be used depending on the needs of a particular application.

## Polyarylene Oxide Polymer

Polyarylene oxide polymers useful in the present invention include those with the following repeat unit:

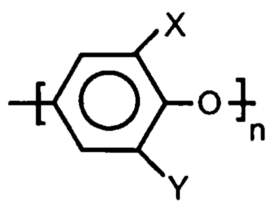

where n designates the number of repeating units, "O" is oxygen, and each "X" and "Y" is an independent monovalent substituent selected from the group consisting of hydrogen, halogen, primary or secondary lower alkyl (i.e., alkyl containing up to seven carbon atoms), phenyl, haloalkyl, aminoalkyl, hydrocarbon radicals, halohydrogen radicals having at least two carbon atoms between the halogen atom and the phenyl nucleus, hydrocarbonoxy radicals and halohydrocarbonoxy radicals having at least two carbon atoms between the halogen atoms and phenyl nucleus. Preferred polyarylene oxides polymers include those where "X" and "Y" is a methyl group. Specific suitable polyarylene oxide polymers include polyphenylene ethers, such as poly(2,6-dimethyl-1,4-phenylene ether). Homopolymer, copolymer, and end-functionalized polyarylene oxides are included.

The polyarylene oxide polymer, or resin, used in the pressure sensitive adhesive typically has a high softening temperature usually from 110 to 230°C, preferably from 120 to 170°C, as determined by differential scanning calorimetry. The weight average molecular weight (Mw) typically ranges from 1,000 to 25,000 (g/mol), preferably 2,000 to 10,000 (g/mol), more preferably 4,000 to 8,000 (g/mol), as determined by gel permeation or size exclusion chromatography. The intrinsic viscosity (IV) of the polyarylene oxide polymer is most often in the range of about 0.05-0.60 dl/g, preferably about 0.08-0.20 dl/g, more preferably in the range of about 0.10-0.15 dl/g, as measured in chloroform at 25°C. The

viscosity is discussed in WO200064973, "Compositions of Styrenic Block Copolymer Resin and Polyphenylene Ether Resin", incorporated herein in its entirety. More than one polyarylene oxide may be used depending on the needs of a particular application.

Polymeric Mixture

As discussed above, the polymeric mixture contains a styrenic block copolymer and a polyarylene oxide polymer. The polyarylene oxide is miscible with the styrenic "A" blocks of the block copolymer and generally has a higher $T_g$ than that of the neat styrenic A block. Thus the polyarylene mixed with the styrenic "A" block serves to raise the $T_g$ of the mixture above that of the styrenic block without polyarylene oxide. Sufficient polyarylene oxide is added to the styrenic "A" block to effect a measurable increase in the resulting $T_g$ of the mixture compared to that of the styrenic block not containing polyarylene oxide. This increase in $T_g$ results in an increase in the cohesive strength of the block copolymer. For tacky constructions, either those with block copolymers that are self-tacky or those with tackifiers added, the increase in cohesive strength also results in an increase in shear holding power as defined in the Examples. Typically the weight ratio of polyarylene oxide to material forming the styrenic blocks is at least 0.05 and more preferably from 0.5 to 5.0. Actual ratios depend on the type and amount of materials in the foamed PSA and the properties desired.

A preferred use of the article is as a pressure sensitive adhesive foam. Various formulating ingredients are known for the preparation of adhesives from block copolymers. The formulating ingredients may include tackifying resins and plasticizers, which perform a variety of functions as an adhesive. The block copolymer itself may not be sufficiently tacky to function as an adhesive. In this case, it may be necessary to add a tackifying resin or combination of resins to increase the tack.

The foamed pressure sensitive adhesive article typically has peel adhesion that is substantially not adversely affected by the presence of polyarylene oxide in the polymeric mixture. Actual peel adhesion can largely depend on the type and amounts of various materials such as, for example, the "B" block of styrenic block copolymer, tackifier and plasticizer.

Some embodiments of the foamed PSA article have a shear holding power of more than 3000 minutes on anodized aluminum at a temperature of 70°C as determined by ASTM 3654 utilizing a sample with dimensions of 25.4 mm by 12.7 mm supporting a 500 g mass. Preferably the value is at least 5000 minutes and more preferably at least 10,000 minutes. Other embodiments have a shear holding power of at least 100 percent more than a chemically uncrosslinked foam of a similar composition but without polyarylene oxide when tested on anodized aluminum at a temperature of 70°C as determined by ASTM 3654 utilizing a sample with dimensions of 25.4 mm by 12.7 mm supporting a 500 g mass. Preferably the value is at least 200 percent and more preferably at least 500 percent. The actual shear holding power is dependent on, among other things, the styrenic block copolymer used as illustrated in the examples.

The maximum use or service temperature of the article tends to increase as the Tg of the polyarylene oxide increases for a given amount of the polyarylene oxide in the mixture or as the ratio of polyarylene oxide to styrenic material increases.

The polymeric mixture is generally suitable for use as an adhesive composition without being additionally crosslinked after formation of a foam. Thus, in most implementations the polymeric mixture does not contain a substantial amount of chemical crosslinks. It is acceptable to partially chemically crosslink the material in certain implementations of the invention, but in general there is not an effective amount of chemical crosslinking realized. By "effective amount", it is meant that the amount of crosslinking is sufficient to increase the shear holding power, at an elevated temperature of 70°C, to over at least 3000 minutes on anodized aluminum at a temperature of 70°C as determined by ASTM 3654 utilizing a sample with dimensions of 25.4 mm by 12.7 mm supporting a 500 g mass, or to at least 100 percent more than a chemically uncrosslinked foam of a similar composition but without polyarylene oxide when tested on anodized aluminum at a temperature of 70°C as determined by ASTM 3654 utilizing a sample with dimensions of 25.4 mm by 12.7 mm supporting a 500 g mass.

By avoiding chemical crosslinking the tackiness and adhesion characteristics of the polymeric mixture are more easily preserved and a large thickness is less of a factor. This absence of chemical crosslinks can be demonstrated, for example, by the gel content of the adhesive composition. In most implementations the polymeric mixture has a gel content of less than 25 percent of the crosslinkable material, preferably less than 10 percent and more preferably less than 2 percent.

The gel content can be estimated by determining the fraction of a composition that becomes insoluble through crosslinking. Generally chemical crosslinks are insoluble and physical crosslinks are soluble when gel content is determined by the test in the Examples.

It is desirable for the polymer composition to be substantially solvent-free. That is, it is preferred that the polymer composition contain less than 20 wt.% solvent, more preferably, contain substantially none to no greater than about 10 wt.% solvent and, even more preferably, contain no greater than about 5 wt.% solvent.

Expandable Polymeric Microspheres

The polymer foam includes a plurality of expandable polymeric microspheres. The foam may also include one or more non-expandable microspheres, which may be polymeric or non-polymeric microspheres (e.g., glass microspheres). The expandable microspheres feature a flexible, thermoplastic, polymeric shell and a core that includes a liquid and/or gases that expands upon heating. The core material is generally an organic substance that has a lower boiling point than the softening temperature of the polymeric shell. Examples of suitable core materials include propane, butane, pentane, isobutane, neopentane, and combinations thereof. Preferred core materials are materials other than air that expand upon heating.

Microspheres suitable for use with the invention usually have an activation temperature below the temperature needed to melt mix the polyarylene oxide polymer and styrenic material. Thus, the activation temperature is generally less than 200°C, more typically less than 150°C.

The choice of thermoplastic resin for the polymeric shell of the microspheres influences the mechanical properties of the foam. Accordingly, the properties of the foam may be adjusted through appropriate choice of microsphere, or by using mixtures of different types of microspheres. For example, acrylonitrile-containing resins are useful where high tensile and cohesive strength are desired, particularly where the acrylonitrile content is at least 50% by weight of the resin, more preferably at least 60% by weight, and even more preferably at least 70% by weight. In general, both tensile and cohesive strength increase with increasing acrylonitrile content. In some cases, it is possible to prepare foams having higher tensile and cohesive strength than the polymer matrix alone, even though the foam has a lower density than the matrix. This provides the capability of preparing high strength, low density articles.

Examples of suitable thermoplastic resins that may be used as the shell include acrylic and methacrylic acid esters such as polyacrylate, acrylate-acrylonitrile copolymer, and methacrylate-acrylic acid copolymer. Vinylidene chloride-containing polymers such as vinylidene chloride-methacrylate copolymer, vinylidene chloride-acrylonitrile copolymer, acrylonitrile-vinylidene chloride-methacrylonitrile-methyl acrylate copolymer, and acrylonitrile-vinylidene chloride-methacrylonitrile-methyl methacrylate copolymer may also be used, but are not preferred where high strength is desired. In general, where high strength is desired, the microsphere shell preferably has no more than 20% by weight vinylidene chloride, more preferably no more than 15% by weight vinylidene chloride. Even more preferred for high strength applications are microspheres that have essentially no vinylidene chloride units. Mixtures of polymers may also be used.

Examples of suitable commercially available expandable polymeric microspheres include those available from Pierce Stevens (Buffalo, NY) under the designations "F30D," "F80SD," and "F100D." Also suitable are expandable polymeric microspheres available from Akzo-Nobel under the designations "Expancel 551," "Expancel 461," and "Expancel 091." Each of these microspheres features an acrylonitrile-containing shell. In addition, the F80SD, F100D, and Expancel 091 microspheres have essentially no vinylidene chloride units in the shell.

The amount of expandable microspheres is selected based upon the desired properties of the foam product. Higher microsphere concentrations generally cause lower density of the foam. The amount of microspheres generally ranges from about 0.1 parts by weight to about 50 parts by weight (based upon 100 parts of polymer mixture), more typically from about 0.5 parts by weight to about 20 parts by weight.

Blowing Agents

Alternatively or in conjunction with expandable microspheres, the foam of the invention may be formed by use of blowing agents, including chemical blowing agents and physical blowing agents. Use of blowing agents instead of expandable microspheres to form a foam tends to make the resulting foam more susceptible to irreversible collapse under pressure. This feature may be desirable in some applications where conformity to irregular surfaces is desired.

A physical blowing agent useful in the present invention is any naturally occurring atmospheric material which is a vapor at the temperature and pressure at which the foam exits the die. The physical blowing agent may be introduced into the polymeric material as a gas or liquid, preferably as a liquid, and may be in a supercritical state. The physical blowing agents used will depend on the properties sought in the resulting foam articles. Other factors considered in choosing a blowing agent are its toxicity, vapor pressure profile, ease of handling, and solubility with regard to the polymeric materials used. Flammable blowing agents such as pentane, butane and other organic materials, such as hydrofluorocarbons (HFC) and hydrochlorofluorocarbons (HCFC) may be used, but non-flammable, non-toxic, non-ozone depleting blowing agents are preferred because they are easier to use, *e.g.*, fewer environmental and safety concerns. Suitable physical blowing agents include, *e.g.*, carbon dioxide, nitrogen, $SF_6$, nitrous oxide, perfluorinated fluids, such as $C_2F_6$, argon, helium, noble gases, such as xenon, air (nitrogen and oxygen blend), and blends of these materials.

Chemical blowing agents may also be added to the melt mixture. Suitable chemical blowing agents include a sodium bicarbonate and citric acid blend, dinitrosopentamethylenetetramine, p-toluenesulfonyl hydrazide, 4-4'-oxybis (benzenesulfonyl hydrazide, azodicarbonamide (1,1'-azobisformamide), p-toluenesulfonyl semicarbazide, 5-phenyltetrazole, 5-phenyltetrazole analogues, diisopropylhydrazodicarboxylate, 5-phenyl-3,6-dihydro-1,3,4-oxadiazin-2-one, and sodium borohydride.

Additional Polymers

Additional polymers may be added to augment properties of the foamed pressure-sensitive adhesive. These include, for example, relatively high modulus polymer that can stiffen the article. Suitable polymers include, e.g., semi-crystalline polymers such as polyamides and polyesters, and relatively low modulus polymer compositions that can increase the flexibility of the article, e.g., plasticized polyvinyl chloride. Relatively immiscible polymer compositions can act to form fibrous networks to further reinforce the cohesive strength of the article when the immiscible phases are elongated under stretching forces. Examples of such structures containing fiber-like reinforcing networks is disclosed in WO 97/23577 "Blended Pressure-Sensitive Adhesives".

Additional Other Ingredients

The foamed pressure sensitive adhesive may contain agents in addition to microspheres, the choice of which is dictated by the properties appropriate for the intended application of the article. Examples of suitable additives include tackifiers (e.g., rosin esters, terpenes, phenols, and aliphatic, aromatic, or mixtures of aliphatic and aromatic synthetic hydrocarbon resins), plasticizers, oils, pigments, dyes, non-expandable polymeric or glass microspheres, reinforcing agents, hydrophobic or hydrophilic silica, calcium carbonate, toughening agents, fire retardants, antioxidants, finely ground polymeric particles such as polyester, nylon, or polypropylene, stabilizers, and combinations thereof. These additives are included in amounts sufficient to obtain the desired end properties.

Methods of making the Pressure Sensitive Adhesive Article

The invention is also directed to a method of forming a foamed pressure sensitive adhesive article. These materials are melt-mixed (optionally with additional ingredients) and generally elevated to a temperature above that of the expandable microspheres (which have not been added at this point). After the polymeric materials are well mixed they are cooled, generally while still being mixed, until they are below the activation temperature of the microspheres. The expandable microspheres are subsequently added and then the temperature of this mixture is raised above the activation temperature of the microspheres, usually in an extrusion die.

More specifically, a first implementation of the method includes providing a polymeric composition containing a styrenic copolymer material and an additional polyarylene oxide having a softening temperature equal to or greater than 110°C. The polymeric composition is heated to a softening temperature without substantially degrading the polymeric components, which are then mixed. The polymeric composition is then cooled to a temperature below the activation temperature of expandable polymeric microspheres, after which expandable polymeric microspheres are added to the cooled polymeric composition. The method generally further comprises heating the polymeric composition above the activation temperature of the polymeric microspheres.

In some embodiments most, if not all, of the expandable microspheres are at least partially expanded before the polymer composition exits the die. Causing expansion of the expandable polymeric microspheres before the composition exits the die generally results in the extruded foam having a smoother surfaces than if it is expanded outside the die.

Referring to Fig. 1, there is shown an extrusion process for preparing an article that includes a polymer foam featuring a polymer matrix and one or more expandable polymer microspheres. According to the process, styrenic block copolymer is initially fed through feed hopper 12 into an extruder 10 (typically a twin screw extruder) which softens and grinds the resin into small particles suitable for eventual conveyance through the extruder as a melt. The styrenic polymer may be added to extruder 10 in any convenient form, including pellets, crumbs, billets, packages, strands, and ropes.

The polyarylene oxide, tackifiers, processing oils, and optional additives are fed to extruder 10 at one or more points immediately prior to kneading sections of the extruder. The mixing conditions (e.g., screw speed, screw length, and temperature) are selected to achieve optimum mixing. Melt temperatures are generally reached in excess of the expandable microsphere expansion temperature, thus the temperature is lowered following the mixing and prior to adding the expandable microspheres.

Once the polymer ingredients and additives have been adequately mixed and the material cooled, expandable polymeric microspheres are added to the resulting mixture and mixed to form an expandable extrudable composition. The purpose of the mixing step is to prepare an expandable extrudable composition in which the expandable polymeric microspheres and other additives, to the extent present, are distributed substantially homogeneously throughout the molten polymer mixture. Typically, the mixing of microspheres and adhesive composition uses multiple kneading blocks to obtain adequate mixing. Simple conveying elements may additionally be used. The temperature, pressure, shear

rate, and mixing time employed during mixing are selected to prepare this expandable extrudable composition without causing significant numbers of the microspheres to expand or break. Specific temperatures, pressures, shear rates, and mixing times are selected based upon the particular composition being processed.

Following mixing, the expandable extrudable composition is metered into extrusion die 14 (e.g., a contact or drop die) through a length of transfer tubing 18 using a gear pump 16 that acts as a valve to control die pressure and thereby prevent premature expansion of the microspheres. The temperature within die 14 is preferably maintained at substantially the same temperature as the temperature within transfer tubing 18, and selected such that it is at or above the temperature required to cause expansion of the expandable microspheres. However, even though the temperature within tubing 18 is sufficiently high to cause microsphere expansion, the relatively high pressure within the transfer tubing prevents them from expanding. Once the composition enters die 14, however, the pressure drops because the volume of the die is greater than the volume of the tubing. The pressure drop, coupled with heat transfer from the die, causes the microspheres to expand within the die, leading to foaming. The pressure within the die continues to drop further as the composition approaches the exit, further contributing to microsphere expansion within the die. The flow rate of polymer through the extruder and the die exit opening are maintained such that as the polymer composition is processed through the die, the pressure in the die cavity remains sufficiently low to allow expansion of the expandable microspheres before the polymer composition reaches the exit opening of die 14. The shape of the foam is dictated by the shape of die 14. Although a variety of shapes may be produced, the foam is typically produced in the form of a continuous or discontinuous sheet.

As shown in Fig. 1, the foam may optionally be combined with a liner 20 dispensed from a feed roll 22. Suitable materials for liner 20 include silicone release liners, polyester films (e.g., polyethylene terephthalate films), and polyolefin films (e.g., polyethylene films). The liner and the foam are then laminated together between a pair of nip rollers 24 and rolled up onto a take-up roll 28.

Pressure Sensitive Adhesive Articles

The adhesive foams of some embodiments of the invention are particularly useful for adhering to low surface energy substrates, for example, those using polymodal asymmetric block copolymers. As used herein, low surface energy substrates are those having a surface energy of less than about 45 dynes per centimeter, more typically less than about 40 dynes per centimeter, and most typically less than about 35 dynes per centimeter. Included among such materials are polypropylene, polyethylene (e.g., high density polyethylene or HDPE), polystyrene and polymethylmethacrylate. Other substrates may also have properties of low surface energy due to a residue, such as an oil residue or a film such as a paint, being on the surface of the substrate. Even though the present adhesive foams bond well to low surface energy surfaces, the invention is not limited to low surface energy substrates, as it has been found that the inventive adhesive foams can also bond well to higher surface energy substrates such as, for example, other plastics, ceramics (e.g., glass), metals.

The properties of the adhesive article may be adjusted by bonding one or more polymer compositions (e.g., in the form of continuous layers or discrete structures such as stripes) to the foam. Both foamed and non-foamed compositions may be used. A composition may be bonded directly to the foam or indirectly, e.g., through a separate adhesive.

The invention also features multi-layer articles that include the above-described foam articles provided on a major surface of a first substrate, or sandwiched between a pair of substrates. Examples of suitable substrates include wood substrates, synthetic polymer substrates, and metal substrates (e.g., metal foils).

Additional multilayer compositions can be obtained by affixing layers of other materials to the foam adhesive. The method of affixing may be co-extrusion, extrusion coating or lamination, for example. One or more extrudable polymer compositions may be used when melt processing techniques are employed. The number and type of polymer compositions are selected based upon the desired properties of the final foam-containing article. For example, polymer compositions prepared by co-extrusion include relatively high modulus polymer compositions for stiffening the article (semi-crystalline polymers such as polyamides and polyesters), relatively low modulus polymer compositions for increasing the flexibility of the article (e.g., plasticized polyvinyl chloride), and additional foam compositions. Alternatively, non-polymeric materials may also be affixed to the foam. Non-polymeric materials include cloth, nonwovens, and foils.

Examples

This invention is illustrated by way of the following examples using the test methods described below.

Foam Density (ASTM D792-86)

Foam samples were cut into 25.4 mm x 25.4 mm specimens and weighed on a high precision balance equipped with a buoyancy force meter that measures the mass of displaced water and available as Model AG245 from Mettler-Toledo, Greifensee, Switzerland. The volume of each sample was obtained by measuring the mass of water displaced at room temperature (25°C). Assuming the density of water at 25°C to be 1 g/cm$^3$, the volume of each sample was calculated using Archimedes's principle. The density of the foam was obtained by dividing the mass by the volume. Accuracy of this measurement was ±0.01 g/cm$^3$.

Foam Thickness

Total foamed article thickness was measured within ± 2.5 (± 0.1 mil) microns using a standard micrometer. Thickness of each skin "A" layer was calculated from measured mass flow and equipment dimensions.

Gel Content

A 2.54 cm by 2.54 cm (1 inch x 1 inch) square of the PSA foam sample was die cut. The release liners were then peeled off by hand from the PSA tape. The PSA tape sample was placed in a pre-weighed basket and weighed. The basket and sample were then submerged in toluene in a sealed glass jar for 24 hours to extract soluble chemically uncrosslinked components from the sample; insoluble components including expandable microspheres, fillers and chemically crosslinked material remain. The sample portion remaining in the basket was then dried for 12 hours in a convection oven at 65°C, and then weighed. The gel content was calculated according to:

$$\text{Gel \%} = \frac{(w_f - w_i)}{w_s} \times 100$$

where,
$w_s$ = Weight of styrenic block copolymer (crosslinkable mass)
$w_i$ = Weight of insolubles material present before chemically crosslinking
$w_f$ = Final weight of sample including insolubles.

Shear Holding Power (modified ASTM 3654)

The holding power of the sample adhesive foams against a surface was determined at two different temperatures using the method of ASTM 3654 except with an anodized aluminum substrate. Two sets of two samples each were cut from sample film. Each sample measured 25.4 mm in length and 12.7 mm in width. The samples were then placed between two pieces of clean anodized aluminum and then put in a constant temperature and humidity room for 24 hours under 22°C and 50% relative humidity. One set of samples was suspended vertically at room temperature. The top of one test surface was attached to a hook and a 1000-g weight was suspended from the bottom of the other test surface. The second set was arranged in a similar manner except testing was done in an oven maintained at 70°C, the weight was 500 g and the samples were allowed to dwell for 15 minutes at 70°C before the weight was suspended. Time was measured for the two test surfaces to separate. If no failure occurred within 10,000 minutes, the test was discontinued and results were recorded as 10,000+ minutes. Failure was cohesive in the foam unless otherwise noted.

Peel Strength

Testing was conducted by preparing foam tapes in the following way. The adhesive foams were slit to a width of 1.27 cm and adhered to 0.127 mm thick and 1.6 cm wide aluminum foil backing to one of the major surfaces of the foam using four passes of a 2 kg hard rubber roller. The resulting laminate was then adhered to the substrate panel of interest (stainless steel-SS, polypropylene-PP, or high density polyethylene-HDPE) using four total passes of a 2 kg hard rubber roller such that the second major surface of the foam made firm contact with the substrate. Plastic panels were obtained from Aeromat Plastics, Burnsville, Minnesota and stainless steel panels were obtained from Assurance Mfg., Minneapolis, Minnesota. The bonded assembly was aged for 3 days at 70°C. After aging, the panels were cooled to 22°C and mounted in an Instron Tensile Tester so that the tape was pulled off at a 90° angle at a speed of 30.5 cm per minute. Results were determined in pounds per 0.5 inch, and converted to Newton per decimeter (N/dm)

***Materials Used***

| Material | Description |
|---|---|
| Polymodal asymmetric block copolymer | A styrene-isoprene based polymodal asymmetric block copolymer prepared according to method for Polymer B described in U.S. Patent No. 5,393,787. The polymer had number average molecular weights of 4,000 and 21,500 (g/mol) for the two styrene end blocks, 135,400 (g/mol) for the arm, and 1,087,000 (g/mol) for the star. The percent of high molecular weight arms was estimated to be about 40% and the weight percent styrene, determined from the charge ratio of styrene and isoprene, was about 9%. |
| Kraton D1107 | A styrene-isoprene-styrene linear triblock copolymer, containing 15% polystyrene, and 18% diblock, available from Kraton Polymers, Houston, Texas. |
| Kraton D1112 | A styrene-isoprene-styrene linear triblock copolymer, containing 15% polystyrene, and 38% diblock, available from Kraton Polymers, Houston, Texas. |
| Regalite R9100 | A partially hydrogenated hydrocarbon tackifier available from Hercules Inc., Wilmington, Delaware. |
| Regalite R1125 | A hydrogenated hydrocarbon tackifier available from Hercules, Inc., Wilmington, Delaware. |
| Escorez 1310LC | Hydrocarbon aliphatic tackifier available from ExxonMobil Chemical Company, Houston, Texas. |
| Escorez 2520 | A hydrocarbon oil available from ExxonMobil Chemical Co., Houston, Texas. |
| Irganox 1010 | An antioxidant available from Ciba Specialty Chemicals, Tarrytown, New York. |
| Tinuvin 328 | An UV stabilizer available from Ciba Specialty Chemicals, Tarrytown, New York. |
| PPO | A polyphenylene ether available as SA120-100 with an IV = 0.12 dl/g, $T_g$ = 160°C, and Mw = 6300 Da. Available from GE Plastics, Pittsfield, Maryland. |

Pre-compounding of "A" Layer Material

For examples having an ABA construction where the "A" Layers were unfoamed, the material of the "A" Layers were pre-compounded by one of Method A, Method B, Method C, or Method D. '

Method A: Polymodal asymmetric block copolymer, Irganox 1010 antioxidant, and Tinuvin 328 UV stabilizer in a weight ratio of 100:4:4 were fed into barrel 1 of a twin screw extruder (30 mm Werner & Pfleiderer Model ZSK-30, L/D = 45:1, 15 barrels) using a gravimetric feeder (K-Tron Model F-1, K-Tron, Pitman, New Jersey). PPO and Regalite R9100 tackifier in a weight ratio of 0:30 or 9:30 based on 100 parts polymodal asymmetric block copolymer were introduced into barrel 1 of the extruder using a second gravimetric feeder. The remaining Regalite R9100 tackifier, 124 parts per 100 parts polymodal asymmetric block copolymer, was introduced into barrels 5 and 7 (split equally) as a liquid using two grid melters (ITW Dynatech Model O22S, Burlington, Massachusetts). Escorez 2520 oil was added to barrel 9 at a rate of 43 parts by weight per 100 parts polymodal asymmetric block copolymer using a 1.2 $cm^3$/rev. Zenith gear pump (Parker Hannifin Corp., Sanford, North Carolina). The total flowrate was maintained at approximately 11.4 kg/hr (25 lb/hr). Each extrusion screw is composed of double-flighted, self-wiping and square channel conveying elements of varying pitch (42mm, 28mm, 20mm, and 14mm) for which each flight makes one complete cycle per revolution in most cases. The screws also contain kneading blocks 14mm in length constructed of 5 paddles offset at 40.5 degrees in either a forward (RH) or reverse (LH) pattern. The first 226 millimeters of the screw are composed of forwarding elements (pitches of 42s, 28s, 20s), with square channel elements beneath the feed port. The first kneading section is located between 226-268 mm of the screw length and consists of a forward kneading block followed by two reverse kneading blocks (RH/LH/LH). A conveying section (268-438 mm) and kneading segments (RH/LH/LH/LH, 438-494 mm) follow.

Four alternating sections of conveying and mixing (RH/LH/LH/LH) segments are located between 494 and 1032 mm (kneading sections occupy 438-494, 616-672, 798-854, and 976-1032). Conveying elements make up the remainder of the screw, decreasing in pitch along the length, for an overall screw length of 1430 mm. The extruder was operated with a screw speed of 300 RPM, at a temperature maintained in barrels 2-8 of about 177°C (350°F) and in barrels 9-15 of about 149°C (300°F). The compounded materials were then fed with a 5 $cm^3$/rev Zenith gear pump from the extruder to a 150 mm (6 in) wide slit die with a 508 micron (20 mil) gap using a 12 mm (0.5 in) diameter stainless steel transfer piping that was operated at 149°C (300°F). The materials were collected into silicone lined boxes and stored until needed.

Method B: Formulations were pre-compounded in a twin screw extruder (30 mm Werner & Pfleiderer, Model ZSK-30, L/D = 36:1, 12 barrels) using conditions similar to that of Method A with some differences. PPO was introduced into barrel 1 in 13.5 or 18 parts by weight per 100 parts polymodal asymmetric block copolymer. Regalite R9100 tackifier was added at 30, 62, and 62 parts per 100 parts polymodal asymmetric block copolymer into barrels 3, 6 and 8, respectively. Escorez 2520 was fed into barrel 10; and the material was passed through a rotary rod die, collected in silicone-lined boxes, and stored until needed. The extrusion screw is similar to that described in Method A with some exceptions. Forwarding elements (42 mm pitch) make up the first 104 mm of the screw, followed by a kneading section. This section contains two forward kneading blocks followed by a pair of reverse kneading blocks (RH/RH/LH/LH), filling 104-188 mm. The next conveying section (188-320) is followed by the first of four identical kneading sections (RH/LH/LH/LH), located at 320-376. Conveying elements separate the remaining three kneading sections, which are located at 508-564, 703-759, and 873-929. The remainder of the screw is made up of conveying elements, decreasing in pitch along the length, for an overall screw length of 1160 mm.

Method C: Several formulations were pre-compounded in a twin screw extruder (40 mm Berstorff, Model ZE, L/D = 40:1, 10 barrels) using conditions substantially similar to that of Method A, with some differences. Linear styrenic block copolymer, either Kraton D1107 or Kraton D1112, was used instead of polymodal asymmetric block copolymer. PPO was introduced into barrel 1 at 0, 15.0 or 37.5 parts by weight per 100 parts linear styrenic block copolymer. Escorez 1310LC tackifier was fed at 66.7, 100 and 150 parts per 100 parts of polymodal asymmetric block copolymer into barrels 2 and 6. Escorez 2520 was not added. The extrusion screw was substantially similar to that described in "Coextrusion of ABA Foam - Method Two".

Method D: Several formulations were pre-compounded in another twin screw extruder (40 mm Berstorff, Model ZE, L/D = 40:1, 10 barrels) using conditions substantially similar to that of Method A, with some differences. PPO was introduced into barrel 1 at 9 parts by weight per 100 parts polymodal asymmetric block copolymer. Regalite R1125 tackifier was used instead of Regalite R9100 and was entirely added to barrel 2 at 96 parts per 100 parts polymodal asymmetric block copolymer.

Coextrusion of ABA Foam - Method One

Foam core material forming the "B" layer was compounded in a twin screw extruder (40 mm Berstorff Model ZE, L/D = 40:1, 10 barrels). The composition of the "B" layer foamable material was similar to that of the unfoamed "A" layer material except the "B" layer material contained expandable microspheres. Polymodal asymmetric block copolymer, 100 parts by weight, was fed into barrel 1 of the extruder using a gravimetric feeder (K-Tron T-35). Solid PPO, antioxidant, UV stabilizer, and Regalite R9100 tackifier were introduced into barrel 1 using a K-Tron T-20 gravimetric feeder. PPO was added in 0, 9, 13.5, or 18 parts per 100 parts of polymodal asymmetric block copolymer. Antioxidant, UV stabilizer, and some Regalite R9100 tackifier were added in a ratio of 4:4:62 parts per 100 parts polymodal asymmetric block copolymer. The remaining Regalite R9100 tackifier in the amount of 92 parts per 100 parts polymodal asymmetric block copolymer was fed as a liquid into barrel 3 using a grid melter. The Escorez 2520 oil was added in the amount of 43 parts by weight per 100 parts polymodal asymmetric block copolymer to barrel 7 as a liquid using a 1.3 cc/rev Zenith gear pump.

The total flowrate was approximately 10 kg/hr (22 lb/hr). A screw design similar to that used for pre-compounding the "A" Layer material was used to adequately compound all the formulation components. The extrusion screws are composed of double-flighted, fully self-wiping conveying elements of varying pitches (60 mm, 40 mm, and 30 mm, each flight makes one complete cycle per revolution) and kneading blocks 50 mm in length constructed of 5 paddles offset at 45 degrees in either a forward (f) or reverse (r) pattern. The first barrel of the screw is composed of forwarding elements (40, 60, 30, 30). Located in barrel two, this section contains a forward kneading block followed by a reverse (f/r). Next, three 30 mm conveying elements lead into the barrel 3 kneading section comprised of two forward kneading blocks (f/f). Alternating sections of conveying (30, 30) and mixing (f/r, f/f, f/r, f/f) sections fill barrels four through seven, each barrel holding one kneading section. Conveying elements make up the remainder of the screw (30, 60, 60, 40, 40, 40, 40, 40, 40, 40, 40, 30). The extruder was operated with a screw speed of 325 RPM and a decreasing temperature profile with barrel 2 at 160°C, barrels 3-5 at 200°C, barrel 6 at 155°C, barrel 7 at 130°C, barrel 8 at 120°C, and barrels 9-10 at 110°C. Expandable microspheres (EMS, F100D Pierce-Stevens, Buffalo, New York) were added to the extruder in barrel 8 using a K-Tron T-20 gravimetric feeder at rates of approximately 0.9 kg/hr (0.4 lb/hr) and in the amount of 2 parts by

weight of 100 parts of total weight. The expandable composition was then fed with a 10.3 $cm^3$/rev Normag gear pump operating at 110°C from the extruder to the "B" slot of the Cloeren three layer feedblock (Model 96-1501, Cloeren, Orange, Texas) through a 16 mm (0.75 in) diameter stainless steel transfer piping that was operated at 149°C (300°F).

The pre-compounded "A" Layer material was fed through a single screw extruder (51 mm (2 in) Bonnot Model WPKR, Green, Ohio) with a 5 $cm^3$/rev Zenith gear pump into the "A" slots of a three-layer feedblock with an ABA selector plug. The skin layer equipment was operated at 177°C (350°F). The skins were transported to the feedblock using a 12 mm (0.5 in) diameter stainless steel transfer piping operated at 177°C (350°F).

The three layer feedblock combined the "B" layer foamable core material with "A" Layer unfoamed skins and was operated at 160°C (320°F). The 3-layered melt stream was formed into a planar sheet using a 254 mm (10 in) wide single layer EDI Ultraflex 40 die (Chippewa Falls, Wisconsin) operated at 188° C (370°F) with a die gap of 1.54 mm (60 mils). The foamable "B" Layer expanded into foam prior to the 3-layered web leaving the die. The resulting ABA foam construction was cast onto a 50°F cast roll at speeds between 1.0 and 1.2 meters per minute (3.2 and 4 fpm). The samples were laminated to a silicone coated polyethylene release liner and collected using a Rotary Automation film winder. The total film thickness was nominally about 1.14 mm (45 mil) and each skin layer was calculated to be about 0.08 mm, 0.13 mm or 18 mm (3 mil, 5 mil or 7 mil).

<u>Coextrusion of ABA Foam - Method Two</u>

Foam core material forming the "B" layer was compounded in a twin screw extruder (40 mm Berstorff Model ZE, L/D = 40:1,10 barrels). The composition of the "B" layer foamed material was similar to that of the unfoamed "A" layer material except the "B" layer material contained expandable microspheres. The polymodal asymmetric block copolymer elastomer, 100 parts by weight, was fed into barrel 1 of the extruder using a vibratory feeder (Engelhardt, Model KDE-SP 200E, Germany). Solid PPO was introduced into barrel 1 using a K-Tron T-20 gravimetric feeder. PPO was added in 0, 15, or 37.5 parts per 100 parts elastomer. Antioxidant, UV stabilizer, and Escorez 1310LC tackifier were added in a ratio of 4:4:67, 4:4:100, or 4:4:150 parts per 100 parts polymodal asymmetric block copolymer elastomer.

The total flowrate was approximately 10 kg/hr (22 1b/hr). The screw design similar to that used for pre-compounding the "A" Layer material was used to adequately compound all the formulation components. Each screw consists of forwarding elements (40, 60, 40, 30, 30) which transport material to the first kneading section and are located toward the end of barrel two. This section contains a forward kneading block followed by a reverse (f/r). Three 30 mm conveying elements lead into the next kneading section at the end of barrel three (f/r). Alternating sections of conveying (30, 30) and mixing (f/f, f/r, f/f, f/f) sections again fill barrels four through seven, followed by the remaining conveying section (30, 60, 60, 40, 40, 40, 40, 40, 40, 40, 30). The extruder was operated with a screw speed of 325 RPM and a decreasing temperature profile with barrels 2 and 3 at 200°C, barrels 4 and 5 at 180°C, barrel 6 at 155°C, barrel 7 at 130°C, barrel 8 at 120°C, and barrels 9 and 10 at 110°C. F100D expandable microspheres (EMS) were added to the extruder in barrel 8 using a K-Tron T-20 gravimetric feeder at rates of approximately 0.9 kg/hr (0.4 lb/hr) and in the amount of 2 parts by total weight. The expandable composition was then fed with a 10.3 $cm^3$/rev Normag gear pump operated at 110°C from the extruder to the "B" slot of a Cloeren 10 inch three layer vane die equipped with 100 mil adjustable lips through a 19 mm (0.75 in) diameter stainless steel transfer piping that was operated at 154°C (310°F).

The pre-compounded "A" Layer material was fed through a single screw extruder (51 mm (2 in) Bonnot Model WPKR, Green, Ohio) with a 5 $cm^3$/rev Zenith gear pump into the "A" slots of a three layer die. The skin layer equipment was operated at 177°C (350°F). The skins were transported to the die using a 19 mm (0.75 in) diameter stainless steel transfer piping operated at 177°C (350°F).

The three layer die combined the "B" Layer foamable core material with "A" Layer unfoamed skins into a planar sheet and was operated at 188°C (370°F). The foamable "B" Layer expanded into foam prior to the 3-layered web leaving the die. The resulting ABA foam construction was cast onto a 55°F cast roll at speeds between 1.0 and 1.2 meters per minute (2.0 and 4 fpm). The samples were laminated to a silicone coated polyethylene release liner and collected using a Rotary Automation film winder. The total 3-layer thickness was nominally about 1.14 mm (45 mil) and each skin layer was calculated to be about 0.13 mm (5 mil).

**Examples 1-3 and Comparative Example 1**

Examples 1-3 illustrate the effect of PPO on the properties of a 3-layer polymodal asymmetric block copolymer-based pressure sensitive adhesive foam construction of the invention.

Example 1 was made using the above-described process for pre-compounding the "A" Layer material (Method A) and forming the ABA pressure-sensitive foam construction (Method One) with the parts by weight of the PPO at 9 parts per 100 parts of polymodal asymmetric block copolymer elastomer in both the "A" layers and the "B" layer. Sample A and B were made with thickness of "A" layers for each sample calculated to be 0.13 mm or 0.08 mm (5 mil or 3 mil), respectively.

Examples 2 and 3 were made as Example 1 except PPO in both the "A" and "B" layers for Example 2 and 3 were present at 13.5 and 18 parts by weight per 100 parts of polymodal asymmetric block copolymer, respectively; and both were made using Pre-Compounding Method B and Coextrusion Method One. Each "A" layer of Sample 2B had a calculated thickness of -.18 mm (7 mil).

Comparative Example 1 was made as Example 1 except no PPO was added to either the "A" layers or the "B" layer.

Both samples of each example were tested for shear at room temperature, shear at 70°C, and peel adhesion. Table 1 lists the parts by weight of styrenic block copolymer (BC) / PPO / tackifier (T) / plasticizer (P) / antioxidant (AO) / ultraviolet light stabilizer (UV) per 100 parts block copolymer and parts by weight expandable microspheres (EMS) per 100 parts of BC/PPO/T/P/AO/UV. Table 1 also shows the weight ratio of PPO to styrenic block, the thickness of each "A" layer and of the total article, and the test results.

Table 1

| Example | BC/PPO/T/P/AO/UV | EMS | PPO/PS | "A" | "ABA" | Density | Gel | Shear in min | | Peel in N/dm (lb/in) | | |
|---|---|---|---|---|---|---|---|---|---|---|---|---|
| | parts by wt | pts/total | wt./wt. | mm | mm | g/cm$^3$ | wt% | 25°C | 70°C | SS | PP | HDPE |
| CE-1A | 100/0/154/43/4/4 | 2 | 0 | 0.13 | 1.16 | 0.71 | 0 | 10000+ | 45 | 307 (17.5) | 424 (24.2) | 319 (18.2) |
| CE-1B | 100/0/154/43/4/4 | 2 | 0 | 0.08 | 1.11 | 0.70 | 0 | 10000+ | 120 | 333 (19.0) | 477 (27.2) | 263 (15.0) |
| 1A | 100/9/154/43/4/4 | 2 | 1 | 0.13 | 1.07 | 0.62 | 0 | 10000+ | 10000+ | 939 (53.6) | 427 (24.4) | 294 (16.8) |
| 1B | 100/9/154/43/4/4 | 2 | 1 | 0.08 | 1.18 | 0.61 | 0 | 10000+ | 10000+ | 761 (43.4) | 371 (21.2) | 224 (12.8) |
| 2A | 100/13.5/154/43/4/4 | 2 | 1.5 | 0.13 | 1.23 | 0.60 | 0 | 10000+ | 10000+ | 536 (30.6) | 477 (27.2) | 207 (11.8) |
| 2B | 100/13.5/154/43/4/4 | 2 | 1.5 | 0.18 | 1.17 | 0.62 | 0 | 10000+ | 10000+ | 757 (43.2) | 693 (39.6) | 308 (17.6) |
| 3A | 100/18/154/43/4/4 | 2 | 2 | 0.13 | 1.09 | 0.65 | 0 | 10000+ | 5140[1] | 834 (47.6) | 505 (28.8) | 259 (14.8) |
| 3B | 100/18/154/43/4/4 | 2 | 2 | 0.08 | 1.13 | 0.56 | 0 | 10000+ | 10000+ | 512 (29.2) | 116 (16.6) | 249 (14.2) |

1 – Adhesive failure from the test substrate.

As seen in Table 1, foamed pressure-sensitive adhesives of the invention have 70°C Shear Holding Power that is substantially greater than similar adhesives that do not contain PPO. Also, the peel strength is not adversely affected against high surface energy substrates (stainless steel) and low surface energy substrates (PP or HDPE).

**Examples 4-7 and Comparative Example 2-4**

Examples 4-7 illustrate the effect of PPO concentration and tackifier concentration on the properties of a 3-layer pressure-sensitive foam of the invention using a linear styrenic block copolymer elastomer.
Example 4 was made using the above-described Method C for pre-compounding the "A" Layer material and Method Two for forming the ABA pressure-sensitive foam construction. The parts by weight of Escorez 1310LC tackifier and PPO were 66.7 parts and 15 parts, respectively, per 100 parts of Kraton D 1107 elastomer in both the "A" layers and the "B" layer. The "B" layer had 2 parts expandable microspheres per 100 parts of the rest of the materials in the "B" layer.
Example 5-7 were made as Example 4 except the parts by weight of Escorez 1310LC tackifier and PPO were 100:15, 100:37.5 and 150:15 per 100 parts of Kraton D1107 elastomer in both the "A" layers and the "B" layer.
Comparative Example 2-4 was made as Example 4, 5 and 7, respectively except no PPO was added to either the "A" layer or the "B" layer.
Each example was tested for shear holding power at room temperature, shear holding power at 70°C, and peel adhesion against stainless steel (SS), polypropylene (PP) and high density polyethylene (HDPE). Table 2 lists the parts by weight of block copolymer (BC) / PPO / tackifier (T) / plasticizer (P) / antioxidant (AO) / ultraviolet light stabilizer (UV) per 100 parts block copolymer and parts by weight expandable microspheres (EMS) per 100 parts of BC/PPO/T/P/AO/UV. Table 2 also shows the weight ratio of PPO to styrene block, the thickness of each "A" layer and of the total article, and the test results.

Table 2

| Example | BC/PPO/T/P/AO/UV | EMS | PPO/PS | "A" | "ABA" | Density | Gel | Shear in min | | Peel in N/dm (lb/in) | | |
|---|---|---|---|---|---|---|---|---|---|---|---|---|
| | parts by wt | pts/total | wt./wt. | mm | mm | g/cm$^3$ | wt% | 25°C | 70°C | SS | PP | HDPE |
| CE-2 | 100/0/66.7/0/4/4 | 2 | 0 | 0.13 | 1.22 | 0.80 | 0 | 10000+ | 82 | 361.4 (20.6) | 368.4 (21.0) | 108.7 (6.2) |
| 4 | 100/15/66.7/0/4/4 | 2 | 1 | 0.13 | 1.14 | 0.82 | 0 | 10000+ | 10000+ | 529.8 (30.2) | 228.0 (13.0) | 252.6 (14.4) |
| CE-3 | 100/0/100/0/4/4 | 2 | 0 | 0.13 | 1.13 | 0.70 | 0 | 10000+ | 68 | 491.2 (28.0) | 466.6 (26.6) | 207.0 (11.8) |
| 5 | 100/15/100/0/4/4 | 2 | 1 | 0.13 | 1.15 | 0.73 | 0 | 10000+ | 6638 | 582.4 (33.2) | 396.5 (22.6) | 294.7 (16.8) |
| 6 | 100/37.5/100/0/4/4 | 2 | 2.5 | 0.13 | 1.13 | 0.73 | 0 | 10000+ | 10000+ | 642.1 (36.6) | 207.0 (11.8) | 140.3 (8.0) |
| CE-4 | 100/0/150/0/4/4 | 2 | 0 | 0.13 | 1.11 | 0.69 | 0 | 10000+ | 86 | 719.3 (41.0) | 438.6 (25.0) | 378.9 (21.6) |
| 7 | 100/15/150/0/4/4 | 2 | 1 | 0.13 | 1.25 | 0.67 | 0 | 10000+ | 4627 | 785.9 (44.8) | 389.4 (22.2) | 477.1 (27.2) |

As seen in Table 2, foamed pressure-sensitive adhesives of the invention have 70°C shear holding powers that are substantially greater than similar adhesives that do not contain PPO. Also, the peel strength is not adversely affected against high surface energy substrates (stainless steel) and low surface energy substrates (PP or HDPE).

**Examples 8-9 and Comparative Example 5**

Examples 8-9 illustrate the effect of PPO concentration on the properties of a 3-layer pressure sensitive foam of the invention using a linear styrenic block copolymer elastomer.

Examples 8-9 were made using the above-described Method C for pre-compounding the "A" Layer material and Method Two for forming the ABA pressure sensitive foam construction. The styrenic block copolymer was Kraton D1112 and the tackifier Escorez 1310LC was present at 100 parts by weight per 100 parts elastomer in both the "A" layers and the "B" layer. PPO was present for Example 8-9 at 15 and 37.5 parts, respectively, per 100 parts of Kraton D1112 elastomer in both the "A" layers and the "B" layer. The "B" layer for Example 8-9 had 2 parts expandable microspheres per 100 parts of the rest of the materials in the "B" layer.

Comparative Example 5 was made as Example 8-9 except no PPO was added to either the "A" layer or the "B" layer.

Each example was tested for shear holding power at room temperature, shear holding power at 70°C, and peel adhesion against stainless steel (SS), polypropylene (PP) and high density polyethylene (HDPE). Table 3 lists the parts by weight of block copolymer (BC) / PPO / tackifier (T) / plasticizer (P) / antioxidant (AO) / ultraviolet light stabilizer (UV) per 100 parts block copolymer and parts by weight expandable microspheres (EMS) per 100 parts of BC/PPO/T/P/AO/UV. Table 3 also shows the weight ratio of PPO to styrene block, the thickness of each "A" layer and of the total article, and the test results.

Table 3

| Example | BC/PPO/T/P/AO/UV | EMS | PPO/PS | "A" | "ABA" | Density | Gel | Shear in min | | Peel in N/dm (lb/in) | | |
|---|---|---|---|---|---|---|---|---|---|---|---|---|
| | parts by wt | pts/total | wt./wt. | mm | mm | $g/cm^3$ | wt% | 25°C | 70°C | SS | PP | HDPE |
| CE-5 | 100/0/100/0/4/4 | 2 | 0 | 0.13 | 1.11 | 0.71 | 0 | 10000+ | 78 | 515.8 (29.4) | 610.5 (17.4) | 203.5 (11.6) |
| 8 | 100/15/100/0/4/4 | 2 | 1 | 0.13 | 1.16 | 0.67 | 0 | 10000+ | 7007 | 600.0 (34.2) | 442.1 (25.2) | 350.8 (20.0) |
| 9 | 100/37.5/100/0/4/4 | 2 | 2.5 | 0.13 | 1.17 | 0.70 | 0 | 10000+ | 10000+ | 652.6 (37.2) | 438.6 (25.0) | 350.8 (20.0) |

As seen in Table 3, foamed pressure-sensitive adhesives of the invention have 70°C shear holding power that are substantially greater than similar adhesives that do not contain PPO. Also, the peel strength is not adversely affected against high surface energy substrates (stainless steel) and low surface energy substrates (PP or HDPE).

## Example 10 and Comparative Example 6

Example 10 illustrates the effect of PPO concentration on the properties of a 3-layer pressure-sensitive foam of the invention using a star block styrenic copolymer with a different tackifier.

Example 10 was made using the above-described Method D for pre-compounding the "A" Layer material and Method Three for forming the ABA pressure-sensitive foam construction. The styrenic block copolymer was polymodal asymmetric block copolymer and the tackifier, Regalite R1125 was present at 96 parts by weight per 100 parts polymodal asymmetric block copolymer in both the "A" layers and the "B" layer. PPO was present at 9 parts per 100 parts of polymodal asymmetric block copolymer in both the "A" layers and the "B" layer resulting in a wt ratio of styrene to PPO of 1. The "B" layer had 2 parts by weight expandable microspheres per 100 parts of the the rest of the materials in the "B" layer.

Comparative Example 6 was made in a manner similar to Example 10 except no PPO was added to either the "A" layer or the "B" layer.

Each example was tested for shear holding power at room temperature, shear holding power at 70°C, and peel adhesion against stainless steel (SS), polypropylene (PP) and high density polyethylene (HDPE). Table 4 lists the parts by weight of block copolymer (BC) / PPO / tackifier (T) / plasticizer (P) / antioxidant (AO) / ultraviolet light stabilizer (UV) per 100 parts block copolymer and parts by weight expandable microspheres (EMS) per 100 parts of BC/PPO/T/P/AO/UV. Table 4 also shows the weight ratio of PPO to styrene block, the thickness of each "A" layer and of the total article, and the test results.

Table 4

| Example | BC/PPO/T/P/AO/UV | EMS | PPO/PS | "A" | "ABA" | Density | Gel | Shear in min | | Peel in N/dm (lb/in) | | |
|---|---|---|---|---|---|---|---|---|---|---|---|---|
| | parts by wt | pts/total | wt./wt. | mm | mm | $g/cm^3$ | wt% | 25°C | 70°C | SS | PP | HDPE |
| CE-6 | 100/0/96/3.6/4/4 | 2 | 0 | 0.13 | 1.06 | 0.68 | 0 | 10000+ | 2772 | 333.3 (19.0) | 389.4 (22.2) | 200.0 (11.4) |
| 10 | 100/9/96/3.6/4/4 | 2 | 1 | 0.13 | 1.14 | 0.72 | 0 | 10000+ | 10000+ | 736.8 (42.0) | 571.9 (32.6) | 186.0 (10.6) |

As seen in Table 4, foamed pressure-sensitive adhesives of the invention have 70°C Shear Holding Power that is substantially greater than similar adhesives that do not contain PPO. Also, the peel strength is not adversely affected against high surface energy substrates (stainless steel) and low surface energy substrates (PP or HDPE).

The foregoing detailed description and examples have been given for clarity of understanding only. No unnecessary limitations are to be understood therefrom. The invention is not limited to the exact details shown and described, for variations obvious to one skilled in the art will be included within the invention defined by the claims.

## Claims

1. A foamed pressure sensitive adhesive article, the article comprising:

    a) a polymeric mixture containing at least one styrenic block copolymer and at least one polyarylene oxide polymer; and
    b) one or more expandable polymeric microsphere(s).

2. The foamed pressure sensitive adhesive article of claim 1, wherein the styrenic block copolymer includes a diene copolymer.

3. The foamed pressure sensitive adhesive article of claim 1, wherein the styrenic block copolymer includes an isoprene copolymer.

4. The foamed pressure sensitive adhesive article of claim 1, wherein the styrenic block copolymer comprises a butadiene copolymer.

5. The foamed pressure sensitive adhesive article of claim 1, wherein the styrenic block copolymer comprises a polymodal asymmetric block copolymer.

6. The foamed pressure sensitive adhesive article of claim 1, wherein the polyarylene oxide polymer has a softening temperature of at least 110°C.

7. The foamed pressure sensitive adhesive article of claim 1, wherein the polyarylene oxide polymer comprises polyphenylene ether.

8. The foamed pressure sensitive adhesive article of claim 1, wherein the polyarylene oxide polymer comprises poly (2,6-dimethyl-1,4-phenylene ether).

9. The foamed pressure sensitive adhesive article of claim 1, further comprising a tackifier.

10. The foamed pressure sensitive adhesive article of claim 1, further comprising at least one of a chemical blowing agent or a physical blowing agent.

11. The foamed pressure sensitive adhesive article of claim 1, having a gel content of less than 25 percent.

12. The foamed pressure sensitive adhesive article of claim 1, wherein the article has peel strength greater than 100 N/dm on polypropylene for an adhesive thickness of about 1.14 mm.

13. The foamed pressure sensitive adhesive article of claim 1,
    wherein the article is a pressure sensitive adhesive foam that has a shear holding power of at least 3000 minutes on anodized aluminum at a temperature of 70°C as determined by ASTM 3654 utilizing a sample with dimensions of 25.4 mm by 12.7 mm supporting a 500 g mass, and a gel content of less than 25 percent of crosslinkable material.

14. The foamed pressure sensitive adhesive article of claim 13, further comprising voids formed by expanded microspheres.

15. The foamed pressure sensitive adhesive article of claim 13, wherein the polyarylene oxide comprises poly(2,6-dimethyl-1,4-phenylene ether).

**16.** The foamed pressure sensitive adhesive article of claim 1,
wherein the article is a pressure-sensitive adhesive foam that has a shear holding power that is at least 100 percent more than that of a chemically uncrosslinked foam of a similar composition but without polyarylene oxide when tested on anodized aluminum at a temperature of 70°C as determined by ASTM 3654 utilizing a sample with dimensions of 25.4 mm by 12.7 mm supporting a 500 g mass, and a gel content of less than 25 percent of crosslinkable material.

**17.** A multi-layered article comprising at least one pressure sensitive adhesive foam article according to claims 1-16.

**18.** The foamed pressure sensitive adhesive article of claim 17, wherein at least one layer is not foamed.

**19.** A method of forming a foamed pressure sensitive adhesive article, the method comprising:

a) providing a polymeric composition containing at least one styrenic block copolymer polymeric material and at least one polyarylene oxide polymer having a softening temperature equal to or greater than 110°C;
b) heating the polymeric composition to a softening temperature without substantially degrading the polymeric components;
c) mixing the polymeric composition;
d) cooling the polymeric composition to a temperature below the activation temperature of polymeric microspheres, and
e) adding expandable polymeric microspheres to the cooled polymeric composition.

**20.** The method according to claim 19, further comprising:

f) heating the polymeric composition above the activation temperature of the polymeric microspheres.

**21.** The method according to claim 19, further comprising melt affixing at least one additional layer onto at least one major surface of the foamed pressure-sensitive article.

**Patentansprüche**

**1.** Geschäumter Haftklebstoffgegenstand, wobei der Gegenstand Folgendes umfasst:

a) ein Polymergemisch, enthaltend mindestens ein styrolisches Blockcopolymer und mindestens ein Polyarylenoxidpolymer; und
b) ein oder mehrere schaumfähige Polymermikrokügelchen.

**2.** Geschäumter Haftklebstoffgegenstand nach Anspruch 1, wobei das styrolische Blockcopolymer ein Diencopolymer umfasst.

**3.** Geschäumter Haftklebstoffgegenstand nach Anspruch 1, wobei das styrolische Blockcopolymer ein Isoprencopolymer umfasst.

**4.** Geschäumter Haftklebstoffgegenstand nach Anspruch 1, wobei das styrolische Blockcopolymer ein Butadiencopolymer umfasst.

**5.** Geschäumter Haftklebstoffgegenstand nach Anspruch 1, wobei das styrolische Blockcopolymer ein polymodales asymmetrisches Blockcopolymer umfasst.

**6.** Geschäumter Haftklebstoffgegenstand nach Anspruch 1, wobei das Polyarylenoxidpolymer eine Erweichungstemperatur von mindestens 110°C hat.

**7.** Geschäumter Haftklebstoffgegenstand nach Anspruch 1, wobei das Polyarylenoxidpolymer Polyphenylenether umfasst.

**8.** Geschäumter Haftklebstoffgegenstand nach Anspruch 1, wobei das Polyarylenoxidpolymer Poly(2,6-dimethyl-1,4-phenylenether) umfasst.

9. Geschäumter Haftklebstoffgegenstand nach Anspruch 1, des Weiteren umfassend einen Klebrigmacher.

10. Geschäumter Haftklebstoffgegenstand nach Anspruch 1, des Weiteren umfassend mindestens eines von einem chemischen oder einem physikalischen Treibmittel.

11. Geschäumter Haftklebstoffgegenstand nach Anspruch 1 mit einem Gelgehalt von weniger als 25 Prozent.

12. Geschäumter Haftklebstoffgegenstand nach Anspruch 1, wobei der Gegenstand eine Schälfestigkeit von größer als 100 N/dm auf Polypropylen bei einer Klebstoffdicke von etwa 1,14 mm aufweist.

13. Geschäumter Haftklebstoffgegenstand nach Anspruch 1, wobei der Gegenstand ein Haftklebstoffschaum ist, der eine Scherhaltekraft von mindestens 3000 Minuten auf anodisiertem Aluminium bei einer Temperatur von 70°C, wie bestimmt durch ASTM 3654 unter Verwendung einer Probe mit den Maßen 25,4 mm mal 12,7 mm, die eine Masse von 500 g trägt, und einen Gelgehalt von weniger als 25 Prozent vernetzbares Material aufweist.

14. Geschäumter Haftklebstoffgegenstand nach Anspruch 13, ferner umfassend durch geschäumte Mikrokügelchen gebildete Hohlräume.

15. Geschäumter Haftklebstoffgegenstand nach Anspruch 13, wobei das Polyarylenoxid Poly(2,6-dimethyl-1,4-phenylenether)umfasst.

16. Geschäumter Haftklebstoffgegenstand nach Anspruch 1, wobei der Gegenstand ein Haftklebstoffschaum ist, der eine um mindestens 100 Prozent höhere Scherhaltekraft als diejenige von chemisch unvernetztem Schaum einer ähnlichen Zusammensetzung, jedoch ohne Polyarylenoxid, beim Testen auf anodisiertem Aluminium bei einer Temperatur von 70°C, wie bestimmt durch ASTM 3654 unter Verwendung einer Probe mit den Maßen 25,4 mm mal 12,7 mm, die eine Masse von 500 g trägt, und einen Gelgehalt von weniger als 25 Prozent vernetzbares Material aufweist.

17. Mehrschichtiger Gegenstand, umfassend mindestens einen Haftklebstoffschaumgegenstand nach den Ansprüchen 1-16.

18. Geschäumter Haftklebstoffgegenstand nach Anspruch 17, wobei mindestens eine Schicht nicht geschäumt ist.

19. Verfahren zum Bilden eines geschäumten Haftklebstoffgegenstands, wobei das Verfahren Folgendes umfasst:

a) Bereitstellen einer Polymerzusammensetzung, enthaltend mindestens ein styrolisches Blockcopolymer-Polymermaterial und mindestens ein Polyarylenoxidpolymer mit einer Erweichungstemperatur von gleich oder größer als 110°C;
b) Erwärmen der Polymerzusammensetzung auf eine Erweichungstemperatur, ohne die Polymerkomponenten wesentlich zu zersetzen;
c) Mischen der Polymerzusammensetzung;
d) Abkühlen der Polymerzusammensetzung auf eine Temperatur unter der Aktivierungstemperatur der Polymermikrokügelchen, und
e) Zusetzen von schaumfähigen Polymermikrokügelchen zur abgekühlten Polymerzusammensetzung.

20. Verfahren nach Anspruch 19, ferner umfassend:

f) Erwärmen der Polymerzusammensetzung über die Aktivierungstemperatur der Polymermikrokügelchen.

21. Verfahren nach Anspruch 19, ferner umfassend das Schmelzbefestigen von mindestens einer zusätzlichen Schicht auf mindestens einer Hauptfläche des geschäumten Haftklebstoffgegenstands.

## Revendications

1. Article en mousse adhésif sensible à la pression, l'article comprenant:

a) un mélange polymère contenant au moins un copolymère séquencé styrénique et au moins un polymère

poly(oxyde d'arylène), et
b) une ou plusieurs microsphère(s) polymère(s) expansible(s).

**2.** Article en mousse adhésif sensible à la pression selon la revendication 1, dans lequel le copolymère séquencé styrénique renferme un copolymère diénique.

**3.** Article en mousse adhésif sensible à la pression selon la revendication 1, dans lequel le copolymère séquencé styrénique renferme un copolymère d'isoprène.

**4.** Article en mousse adhésif sensible à la pression selon la revendication 1, dans lequel le copolymère séquencé styrénique comprend un copolymère de butadiène.

**5.** Article en mousse adhésif sensible à la pression selon la revendication 1, dans lequel le copolymère séquencé styrénique comprend un copolymère séquencé asymétrique polymodal.

**6.** Article en mousse adhésif sensible à la pression selon la revendication 1, dans lequel le polymère poly(oxyde d'arylène) a une température de ramollissement d'au moins 110°C.

**7.** Article en mousse adhésif sensible à la pression selon la revendication 1, dans lequel le polymère poly(oxyde d'arylène) comprend du poly(éther de phénylène).

**8.** Article en mousse adhésif sensible à la pression selon la revendication 1, dans lequel le polymère poly(oxyde d'arylène) comprend du poly(éther de 2,6-diméthyl-1,4-phénylène).

**9.** Article en mousse adhésif sensible à la pression selon la revendication 1, comprenant en outre un agent donnant du collant.

**10.** Article en mousse adhésif sensible à la pression selon la revendication 1, comprenant en outre au moins un agent gonflant soit chimique soit physique.

**11.** Article en mousse adhésif sensible à la pression selon la revendication 1, ayant une teneur en gel inférieure à 25 pour cent.

**12.** Article en mousse adhésif sensible à la pression selon la revendication 1, dans lequel l'article a une résistance au pelage supérieure à 100 N/dm sur du polypropylène pour une épaisseur d'adhésif d'environ 1,14 mm.

**13.** Article en mousse adhésif sensible à la pression selon la revendication 1, dans lequel l'article est une mousse adhésive sensible à la pression qui a une tenue au cisaillement d'au moins 3 000 minutes sur de l'aluminium anodisé à une température de 70°C, déterminée par ASTM 3654 au moyen d'un échantillon de dimensions 25,4 mm sur 12,7 mm supportant une masse de 500 g, et une teneur en gel inférieure à 25 pour cent de matériau réticulable.

**14.** Article en mousse adhésif sensible à la pression selon la revendication 13, comprenant en outre des alvéoles formées par les microsphères expansées.

**15.** Article en mousse adhésif sensible à la pression selon la revendication 13, dans lequel le poly(oxyde d'arylène) comprend du poly(éther de 2,6-diméthyl-1,4-phénylène).

**16.** Article en mousse adhésif sensible à la pression selon la revendication 1, dans lequel l'article est une mousse adhésive sensible à la pression qui a une tenue au cisaillement qui est supérieure d'au moins 100 pour cent à celle d'une mousse non réticulée par voie chimique de composition semblable, mais sans poly(oxyde d'arylène), quand on fait l'essai sur de l'aluminium anodisé à une température de 70°C, déterminée par ASTM 3654 au moyen d'un échantillon de dimensions 25,4 mm sur 12,7 mm supportant une masse de 500 g, et une teneur en gel inférieure à 25 pour cent de matériau réticulable.

**17.** Article multicouche comprenant au moins un article en mousse adhésif sensible à la pression selon les revendications 1-16.

**18.** Article en mousse adhésif sensible à la pression selon la revendication 17, dans lequel au moins une couche n'est

pas expansée.

**19.** Procédé de formation d'un article en mousse adhésif sensible à la pression, le procédé comprenant les étapes consistant à :

a) se procurer une composition polymère contenant au moins un matériau polymère qui est un copolymère séquencé styrénique et au moins un polymère poly(oxyde d'arylène) ayant une température de ramollissement supérieure ou égale à 110°C;
b) chauffer la composition polymère à une température de ramollissement sans dégrader sensiblement les composants polymères ;
c) mélanger la composition polymère;
d) refroidir la composition polymère à une température inférieure à la température d'activation des microsphères polymères, et
e) ajouter les microsphères polymères expansibles à la composition polymère refroidie.

**20.** Procédé selon la revendication 19, comprenant en outre l'étape consistant à :

f) chauffer la composition polymère au-dessus de la température d'activation des microsphères polymères.

**21.** Procédé selon la revendication 19, comprenant en outre le fait d'appliquer en fusion au moins une couche supplémentaire sur au moins une surface majeure de l'article en mousse sensible à la pression.

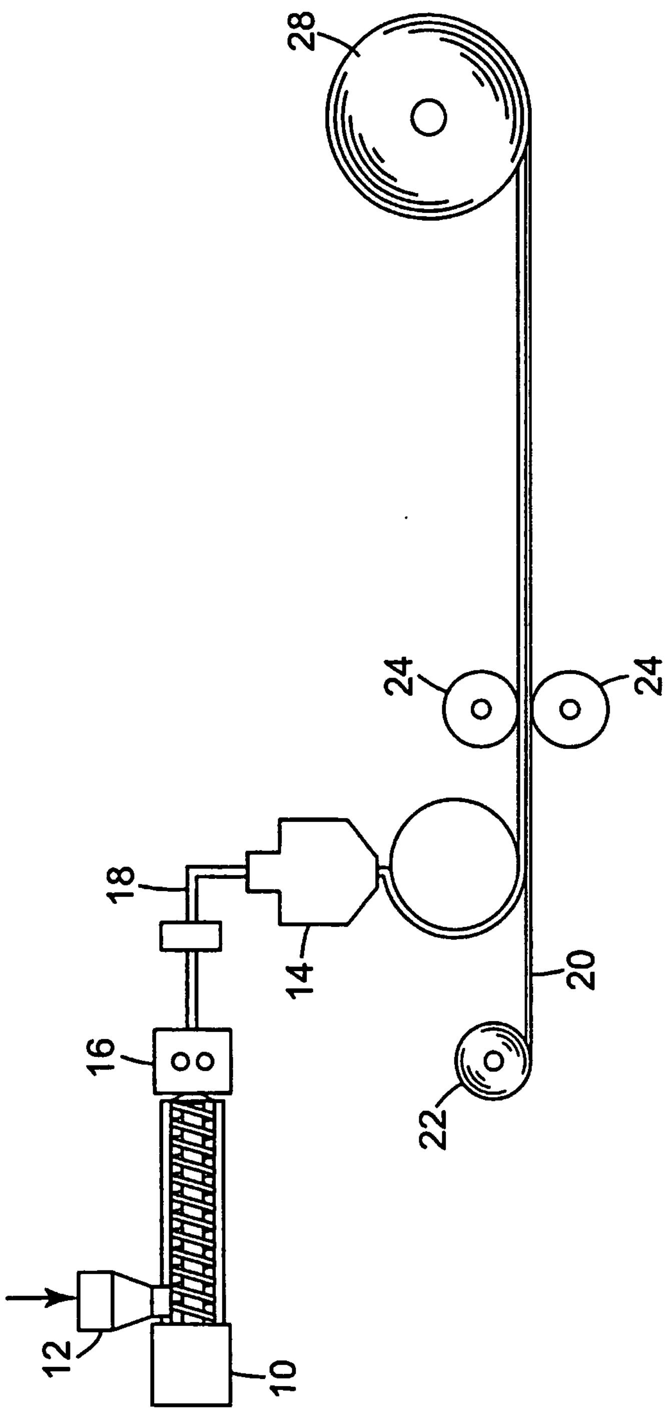


Fig. 1